# EUROPEAN PATENT APPLICATION

(11) **EP 4 011 556 A1**
(43) Date of publication of application: **15.06.2022**
(21) Application number: 20850705.3
(22) Date of filing: 04.08.2020
(51) Int. Cl.: B24D 3/00, B24D 5/00, C09K 3/14

(54) **SUPERABRASIVE AND SUPERABRASIVE WHEEL**

(30) Priority: 06.08.2019 JP 2019144241
(71) Applicant: SUMITOMO ELECTRIC INDUSTRIES, LTD., Osaka-shi, Osaka 541-0041 (JP); A.L.M.T. Corp., Minato-ku Tokyo 105-0014 (JP)
(72) Inventor: OKAMURA, Katsumi, Osaka-shi, Osaka 541-0041 (JP); ISHII, Akito, Osaka-shi, Osaka 541-0041 (JP); OHATA, Masahiro, Osaka-shi, Osaka 541-0041 (JP); CHIHARA, Kentaro, Kato-shi, Hyogo 679-0221 (JP); NAKAMURA, Nobuhide, Kato-shi, Hyogo 679-0221 (JP)
(74) Representative: Boult Wade Tennant LLP
(86) International application number: PCT/JP2020/029806
(87) International publication number: WO 2021/025014

(57) **Abstract**

A super-abrasive grain comprises a body composed of cubic boron nitride or diamond, and a coating film including aluminum and oxygen and coating at least a portion of a surface of the body of the abrasive grain.

## Description

### TECHNICAL FIELD

The present disclosure relates to super-abrasive grains and a super-abrasive grinding wheel. The present application claims priority based on Japanese Patent Application No. 2019-144241 filed on August 6, 2019. The entire contents of the description in this Japanese patent application are incorporated herein by reference.

### BACKGROUND ART

A super-abrasive tool (a wheel) of PTL 1 (Japanese Patent Laid-Open No. 2002-137168) is known as a tool used for precision processing. This super-abrasive tool comprises a disk-shaped substrate and an abrasive grain layer formed on an outer peripheral portion of the substrate. The abrasive grain layer includes super-abrasive grains (diamond abrasive grains, cubic boron nitride abrasive grains or the like) and a bonding material which bonds the super-abrasive grains together and also fixes the super-abrasive grains to the outer peripheral portion of the substrate.

### CITATION LIST

### PATENT LITERATURE

[PTL 1] Japanese Patent Laying-Open No. 2002-137168

### SUMMARY OF INVENTION

According to the present disclosure, a super-abrasive grain comprises:
a body composed of cubic boron nitride or diamond; and
a coating film including aluminum and oxygen and coating at least a portion of a surface of the body.

According to the present disclosure, a super-abrasive grinding wheel comprises:
a disk-shaped substrate; and
a super-abrasive grain layer covering at least an outer peripheral surface of the substrate,
the super-abrasive grain layer having the super-abrasive grain described above.

### BRIEF DESCRIPTION OF DRAWINGS

Fig. 1 is a schematic cross section of a super-abrasive grain according to a first embodiment.
Fig. 2 is an enlarged cross section of a portion of the super-abrasive grain shown in Fig. 1 that is surrounded by a circle drawn with a broken line.
Fig. 3 is a schematic perspective view of a super-abrasive grinding wheel according to a second embodiment.
Fig. 4 is a cross section of the super-abrasive grinding wheel shown in Fig. 3 as cut along a plane including a line (IV)-(IV).
Fig. 5 is an enlarged cross section of a portion of the super-abrasive grinding wheel shown in Fig. 4 that is surrounded by a circle drawn with a broken line.

### DETAILED DESCRIPTION

### [Problem to be Solved by the Present Disclosure]

When the tool of PTL 1 is used to grind a workpiece, a portion of the abrasive grain layer that comes into contact with the workpiece is locally exposed to high temperature. Thus, when the tool of PTL 1 is used to grind the workpiece, the diamond abrasive grains or cubic boron nitride abrasive grains react with a component of the workpiece (mainly an iron group element), and the workpiece tends to adhere to the abrasive grain layer and the abrasive grain layer tends to be increasingly, chemically worn, resulting in the tool providing a reduced grinding ratio.

Accordingly, an object of the present disclosure is to provide super-abrasive grains that can be used for a tool to allow the tool to have a high grinding ratio, and a super-abrasive grinding wheel having a high grinding ratio.

### [Advantageous Effect of the Present Disclosure]

Accordingly to the present disclosure there can be provided super-abrasive grains that can be used for a tool to allow the tool to have a high grinding ratio, and a super-abrasive grinding wheel having a high grinding ratio.

### [Description of Embodiments of the Present Disclosure]

First, embodiments of the present disclosure will be specified and described.
(1) A super-abrasive grain in one embodiment of the present disclosure comprises:
   a body composed of cubic boron nitride or diamond; and
   a coating film including aluminum and oxygen and coating at least a portion of a surface of the body.

   A tool using super-abrasive grains of the present disclosure can have a high grinding ratio. In the present specification, a grinding ratio is defined as "the volume of a workpiece ground away/the total worn volume of super-abrasive grains."
(2) Preferably, the body of the abrasive grain is composed of cubic boron nitride.
   This allows the body to be significantly excellent in wear resistance and accordingly, enhances the super-abrasive grain in wear resistance.
(3) Preferably, the body of the abrasive grain has a single-crystal structure.
   This facilitates enhancing the body in strength.
(4) Preferably, the body of the abrasive grain has a polycrystalline structure.
   This helps a tool using such super-abrasive grains to have a better grinding ratio.
(5) Preferably, the coating film includes γ-Al₂O₃.
   This allows the coating film to be composed of a plurality of crystal grains having a reduced average grain size, and thus allows the coating film to be enhanced in strength and also enhances adhesive strength between the coating film and the body of the abrasive grain. This in turn suppresses destruction and peeling of the film due to impact caused as the film comes into contact with a workpiece. Therefore, the coating film can maintain satisfactory wear resistance for a long period of time.
(6) Preferably, the coating film includes one or more types of compounds composed of a first element of at least one type selected from the group consisting of a group 4 element, a group 5 element and a group 6 element of the periodic table and a second element of at least one type selected from the group consisting of oxygen, nitrogen, carbon, and boron.
   This further enhances the coating film in wear resistance.
(7) Preferably, the coating film includes a plurality of crystal grains, and the plurality of crystal grains have an average grain size of 100 nm or less.
   This further enhances the coating film in strength.
(8) Preferably, in the coating film, aluminum and oxygen have an atomic ratio Al/O of 0.2 or more and 0.9 or less.
   This further enhances the coating film in wear resistance and also enhances adhesive strength between the coating film and the body of the abrasive grain.
(9) Preferably the Al/O ratio is 0.4 or more and 0.7 or less.
   This further enhances the coating film in wear resistance and also further enhances adhesive strength between the coating film and the body of the abrasive grain.
(10) Preferably the coating film has a thickness of 50 nm or more and 1000 nm or less.
   When the coating film has a thickness of 50 nm or more, it facilitates enhancing the coating film per se in wear resistance and hence suppressing damage to the coating film and the body of the abrasive grain. When the coating film has a thickness of 1000 nm or less, the coating film does not have an excessively large thickness and thus does not easily peel off, and a state with the coating film formed on an external surface of the body of the abrasive grain is easily maintained.
(11) Preferably, the coating film has a multilayer structure composed of two or more types of unit layers.
   When the coating film has a multilayer structure, each unit layer's residual stress increases. This enhances the coating film in hardness and thus suppresses damage to the coating film.
(12) Preferably, the super-abrasive grain has a grain size of 30 µm or more and 600 µm or less.
   The super-abrasive grain having a grain size of 30 µm or more is not excessively small and is thus easily fixed to a super-abrasive grinding wheel and hence facilitates grinding a workpiece, and in addition, it is also easily handled and hence facilitates constructing the super-abrasive grinding wheel. The super-abrasive grain having a grain size of 600 µm or less is not excessively large and thus not easily fractured or similarly damaged due to an impactive force acting on the body of the abrasive grain as it is brought into contact with a workpiece.
(13) A super-abrasive grinding wheel in one embodiment of the present disclosure comprises:
   a disk-shaped substrate; and
   a super-abrasive grain layer covering at least an outer peripheral surface of the substrate,
   the super-abrasive grain layer having the super-abrasive grain described above.

   The super-abrasive grinding wheel of the present disclosure can have a high grinding ratio.

### [Detailed Description of Embodiments of the Present Disclosure]

Details of embodiments of the present disclosure will be described below with reference to the drawings. In the drawings of the present disclosure, the same reference numerals designate identical or corresponding parts. In addition, dimensional relations in length, width, thickness, depth, and the like are changed as appropriate for clarity and simplicity of the drawings, and do not necessarily represent actual dimensional relations.

In the present specification, an expression in the form of "A to B" means a range's upper and lower limits (that is, A or more and B or less), and when A is not accompanied by any unit and B is alone accompanied by a unit, A has the same unit as B.

In the present specification, when a compound or the like is represented by a chemical formula without specifying any specific atomic ratio, it shall include any conventionally known atomic ratio and should not necessarily be limited to what falls within a stoichiometric range. For example, for "TiAIN," the ratio of the number of atoms constituting TiAIN includes any conventionally known atomic ratio. This also applies to descriptions for compounds other than "TiAlN."

### [First Embodiment: super-abrasive grain]

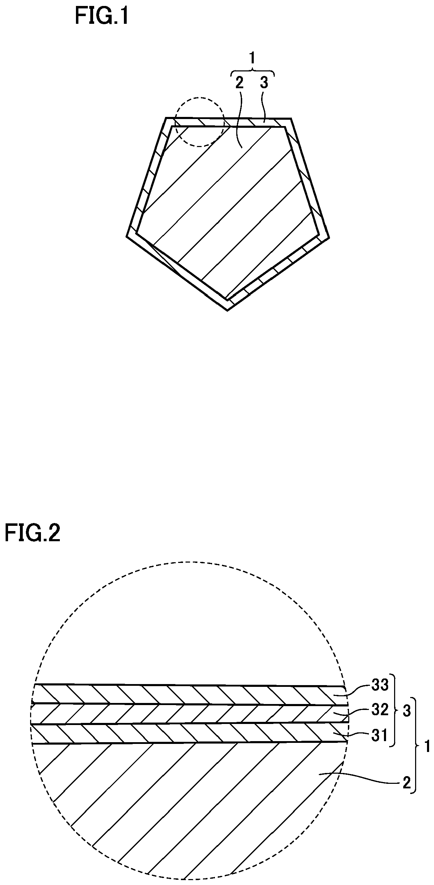

A super-abrasive grain according to an embodiment of the present disclosure will now be described with reference to Figs. 1 and 2. Fig. 1 is a schematic cross section of a super-abrasive grain according to a first embodiment. Fig. 2 is an enlarged cross section of a portion of the super-abrasive grain shown in Fig. 1 that is surrounded by a circle drawn with a broken line.

A super-abrasive grain 1 of the present disclosure comprises a body 2 of the abrasive grain composed of cubic boron nitride or diamond, and a coating film 3 including aluminum and oxygen and coating at least a portion of a surface of body 2 of the abrasive grain. A tool using such super-abrasive grains of the present disclosure can have a high grinding ratio. A reason for this is inferred as indicated by items (i) to (iii) below:
(i) The super-abrasive grain of the present disclosure has its body composed of cubic boron nitride or diamond. Cubic boron nitride and diamond are high in hardness. Therefore, the super-abrasive grain using cubic boron nitride or diamond as its body exhibits excellent wear resistance. Therefore, a tool using the super-abrasive grain of the present disclosure can have a high grinding ratio.
(ii) The super-abrasive grain of the present disclosure has its body with a surface at least partially coated with a coating film. The super-abrasive grain thus having the coating film can suppress a chemical reaction caused by the body of the abrasive grain and a component of a workpiece while the workpiece is ground. Further, it can prevent atoms constituting the body of the abrasive grain from diffusing into the coating film and the workpiece. This can suppress progression of wear of the body of the abrasive grain and adhesion of the component of the workpiece, and accordingly, grinding force is low and stable for a long period of time. As a result, fracture of the body of the abrasive grain due to adhesion and peeling, increased grinding force, and the like is also reduced. A tool using such super-abrasive grains of the present disclosure can thus have a high grinding ratio.
(iii) The super-abrasive grain of the present disclosure has the coating film including aluminum and oxygen. The coating film including aluminum and oxygen enhances adhesive strength between the coating film and the body of the abrasive grain and suppresses peeling of the film. As a result, damages such as wear and destruction of the coating film and the body of the abrasive grain are suppressed. A tool using such super-abrasive grains of the present disclosure can thus have a high grinding ratio.

### (Grain size of super-abrasive grain)

The super-abrasive grain preferably has a grain size of 30 µm or more and 600 µm or less. For the super-abrasive grain of the first embodiment, the grain size of the super-abrasive grain means the grain size of a single super-abrasive grain.

The super-abrasive grain having a grain size of 30 µm or more is not excessively small and is thus easily fixed to a super-abrasive grinding wheel and hence facilitates grinding a workpiece, and in addition, it is also easily handled and hence facilitates constructing the super-abrasive grinding wheel. The super-abrasive grain having a grain size of 600 µm or less is not excessively large and thus not easily fractured or similarly damaged due to an impactive force acting on the body of the abrasive grain as it is brought into contact with a workpiece.

The super-abrasive grain has a grain size with a lower limit preferably of 30 µm, more preferably 50 µm, still more preferably 60 µm. The super-abrasive grain has the grain size with an upper limit preferably of 600 µm, more preferably 300 µm, still more preferably 150 µm. The super-abrasive grain preferably has a grain size of 50 µm or more and 300 µm or less, more preferably 60 µm or more and 150 µm or less.

The grain size of the super-abrasive grain is measured with a laser diffraction type particle size distribution analyzer (for example, the SALD series manufactured by Shimadzu Corporation).

### [Body of abrasive grain]

The body of the abrasive grain is composed of cubic boron nitride (hereinafter also referred to as "cBN") or diamond. Cubic boron nitride and diamond are excellent in hardness. Therefore, the super-abrasive grain using cubic boron nitride or diamond as its body exhibits excellent wear resistance. A tool using super-abrasive grains of the present disclosure can thus have a high grinding ratio.

### (Composition)

The body of the abrasive grain is preferably composed of cubic boron nitride. This allows the body to be significantly excellent in wear resistance and accordingly, enhances the super-abrasive grain in wear resistance.

The body of the abrasive grain is preferably composed of diamond. The body of the abrasive grain that is composed of diamond is tough, and a tool using super-abrasive grains including such a body can have a high grinding ratio.

The composition of the body of the abrasive grain can be identified using an energy dispersive X-ray (EDX) analyzer (Octane Elect EDS system) (trademark) accompanying a scanning electron microscope (SEM) ("JSM-7800F" (trademark) manufactured by JEOL Ltd.).

The body of the abrasive grain can have a single-crystal structure or a polycrystalline structure. When the body of the abrasive grain has a single-crystal structure, the body of the abrasive grain is easily enhanced in strength. When the body of the abrasive grain has a polycrystalline structure, it helps a tool using such abrasive grains to have a better grinding ratio.

### (Crystal Structure)

The crystal structure of the body of the abrasive grain can be identified by a composite analysis of an X-ray diffraction (XRD) analysis (measuring a peak intensity) (device: "MiniFlex 600" (trademark) manufactured by JOEL Ltd.) and information of the composition of the body of the abrasive grain, or through an observation with a scanning transmission electron microscope (STEM) "JEM-2100F/Cs" (trademark) manufactured by JEOL Ltd. and energy dispersive X-ray (EDX) spectroscopy accompanying the STEM.

### (Grain size of crystal grain constituting body of abrasive grain)

When body 2 of the abrasive grain has a single-crystal structure, the body of the abrasive grain has a grain size corresponding to the grain size of a single-crystal.

When body 2 of the abrasive grain has a polycrystalline structure, the body of the abrasive grain is composed of a plurality of crystal grains having an average grain size preferably of 100 nm or more and 6000 nm or less, more preferably 200 nm or more and 4000 nm or less, particularly preferably 300 nm or more and 2000 nm or less.

The average grain size of the crystal grains in this case is determined from a cross section of the body of the abrasive grain exposed by a FIB (a focused ion beam), and observed in an HAADF (high-angle annular dark field)-STEM image through an STEM (JEM-ARM200F Dual-X (trademark) produced by JEOL Ltd.). From a difference in contrast of each crystal grain in the HAADF-STEM image, a cross-sectional area of each crystal grain is derived through image analysis software ("WinROOF ver. 7.4.1" (trademark) manufactured by Mitani Corporation), and the diameter of a circle having an area equal to that cross-sectional area (or an equivalent circle diameter) is determined. An average value of the equivalent circle diameters of ten crystal grains is taken as the average grain size of the plurality of crystal grains configuring the body of the abrasive grain.

### [Coating film]

Coating film 3 coats at least a portion of a surface of body 2 of the abrasive grain. The fact that the coating film coats at least a portion of the surface of body 2 of the abrasive grain can be confirmed in the following method.

A molded body in which super-abrasive grains are buried in epoxy resin is produced. The content of the super-abrasive grains in the molded body is 50% by volume or more with respect to the resin. The molded body has a shape of a rectangular parallelepiped or a cube.

The molded body is subjected to a CP (cross section polisher) process. This process is performed in two stages. In a first stage of the process, the molded body has any surface processed until a cross section of at least one super-abrasive grain is visible. Subsequently, as a second stage of the process, the processed surface is further CP-processed to remove a thickness corresponding to a length equivalent to 50% of the grain size of the super-abrasive grain. Note that the grain size of the super-abrasive grain is a value as measured with a laser diffraction type particle size distribution analyzer described above.

Subsequently, the cross section of the molded body is observed with an SEM to obtain a backscattered electron image. From the backscattered electron image, it can be confirmed that the coating film coats at least a portion of a surface of body 2 of the abrasive grain.

Coating film 3 preferably coats the entire surface of body 2 of the abrasive grain. The super-abrasive grain thus having the coating film can suppress a chemical reaction caused by the body of the abrasive grain and a component of a workpiece while the workpiece is ground. Further, it can prevent atoms constituting the body of the abrasive grain from diffusing into the coating film, the workpiece and the like. This can suppress progression of wear of the body of the abrasive grain and adhesion of the component of the workpiece, and accordingly, grinding force is low and stable for a long period of time. As a result, fracture of the body of the abrasive grain due to adhesion and peeling, increased grinding force, and the like is also reduced. A tool using super-abrasive grains of the present disclosure can thus have a high grinding ratio.

Note that a grinding ratio is "the volume of a workpiece ground away/the total worn volume of super-abrasive grains." A method for calculating the grinding ratio will be described below.

The super-abrasive grains' total worn volume is determined as follows: Before and after a super-abrasive grinding wheel having super-abrasive grains fixed thereto is used in a grinding process, the super-abrasive grinding wheel is used to grind a carbon plate to transfer undulations of an abrasive surface of the super-abrasive grinding wheel to the carbon plate. When grinding the carbon plate, the super-abrasive grinding wheel is rotated to cut into the carbon plate without moving the carbon plate.

The cross-sectional shape of the undulations of each carbon plate transferred before the grinding process and that after the grinding process are measured with a stylus type surface roughness meter (SURFCOM (trademark) manufactured by TOKYO SEIMITSU CO., LTD.) in a direction perpendicular to a direction in which the super-abrasive grinding wheel rotates. Two cross-sectional shapes obtained before and after the grinding process are compared to determine the reduced area. Let "(the reduced area) x (the diameter of the super-abrasive grinding wheel) x π" be the total worn volume of the super-abrasive grains.

A volume of the workpiece that is ground away (hereinafter also referred to as a "removed amount in volume") is determined by the product of a cutting depth and the workpiece's length and thickness. Material's removed amount in volume is represented by a horizontal axis and a worn amount is represented by a vertical axis to plot a change, and therefrom a linear function of the change is determined by the method of least squares to calculate a gradient. This is used to calculate the super-abrasive grains' total worn volume for any removed amount in volume.

### (Composition)

Coating film 3 includes aluminum and oxygen. The coating film including aluminum and oxygen enhances adhesive strength between the coating film and the body of the abrasive grain and suppresses peeling of the film. As a result, damages such as wear and destruction of the coating film and the body of the abrasive grain are suppressed. A tool using super-abrasive grains of the present disclosure can thus have a high grinding ratio.

A compound including aluminum and oxygen includes Al₂O₃ (alumina). For Al₂O₃, there exist crystal structures such as α-Al₂O₃, γ-Al₂O₃, δ-Al₂O₃, η-Al₂O₃, θ-Al₂O₃, κ-Al₂O₃, ρ-Al₂O₃, and χ-Al₂O₃. The coating film can include any of these crystal structures. While Al₂O₃ (alumina) has an atomic ratio of Al and O of 2:3, Al₂O₃ (alumina) in the present invention does not necessarily have an atomic ratio of Al and O that completely matches 2:3, and may be within a range as will be described hereinafter.

Inter alia, coating film 3 preferably includes γ-Al₂O₃. This allows the coating film to be composed of a plurality of crystal grains having a reduced average grain size, and thus allows the coating film to be enhanced in strength and also enhances adhesive strength between the coating film and the body of the abrasive grain. This in turn suppresses destruction and peeling of the film due to impact caused as the film comes into contact with a workpiece. Therefore, the coating film can maintain satisfactory wear resistance for a long period of time.

The coating film preferably includes the compound including aluminum and oxygen in a total amount preferably of 10% by volume or more and 100% by volume or less, more preferably 30% by volume or more and 95% by volume or less, still more preferably 50% by volume or more and 90% by volume or less.

In the coating film, aluminum and oxygen preferably have an atomic ratio Al/O of 0.2 or more and 0.9 or less. This further enhances the coating film in wear resistance and also enhances adhesive strength between the coating film and the body of the abrasive grain.

Aluminum and oxygen have an atomic ratio Al/O more preferably of 0.4 or more and 0.7 or less, still more preferably 0.45 or more and 0.67 or less. This further enhances the coating film in wear resistance and also further enhances adhesive strength between the coating film and the body of the abrasive grain.

A method for measuring the atomic ratio of aluminum and oxygen in the coating film is as follows: The super-abrasive grain is subjected to inductively coupled high frequency plasma spectroscopy (ICP) and inert gas fusion to measure an Al content and an oxygen content, respectively. These are converted into atomic percentages to calculate an atomic ratio.

Preferably, coating film 3 includes, in addition to the compound including aluminum and oxygen, one or more types of compounds composed of a first element of at least one type selected from the group consisting of a Group 4 element (titanium (Ti), zirconium (Zr), hafnium (Hf) and the like), a Group 5 element (vanadium (V), niobium (Nb), tantalum (Ta) and the like), and a Group 6 element (chromium (Cr), molybdenum (Mo), tungsten (W) and the like) of the periodic table, and a second element of at least one type selected from the group consisting of oxygen, nitrogen, carbon and boron. This further enhances the coating film in wear resistance.

Examples of a compound composed of the first metal element and nitrogen (i.e., a nitride) can include titanium nitride (TiN), zirconium nitride (ZrN), hafnium nitride (HfN) vanadium nitride (VN), niobium nitride (NbN), tantalum nitride (TaN), chromium nitride (Cr₂N), molybdenum nitride (MoN), tungsten nitride (WN), titanium zirconium nitride (TiZrN), titanium hafnium nitride (TiHfN), titanium vanadium nitride (TiVN), titanium niobium nitride (TiNbN), titanium tantalum nitride (TiTaN), titanium chromium nitride (TiCrN), titanium molybdenum nitride (TiMoN), titanium tungsten nitride (TiWN), zirconium hafnium nitride (ZrHfN), zirconium vanadium nitride (ZrVN), zirconium niobium nitride (ZrNbN), zirconium tantalum nitride (ZrTaN), zirconium chromium nitride (ZrCrN), zirconium molybdenum nitride (ZrMoN), zirconium tungsten nitride (ZrWN), hafnium vanadium nitride (HfVN), hafnium niobium nitride (HfNbN), hafnium tantalum nitride (HfTaN), hafnium chromium nitride (HfCrN), hafnium molybdenum nitride (HfMoN), hafnium tungsten nitride (HfWN), vanadium niobium nitride (VNbN), vanadium tantalum nitride (VTaN), vanadium chromium nitride (VCrN), vanadium molybdenum nitride (VMoN), vanadium tungsten nitride (VWN), niobium tantalum nitride (NbTaN), niobium chromium nitride (NbCrN), niobium molybdenum nitride (NbMoN), niobium tungsten nitride (NbWN), tantalum chromium nitride (TaCrN), tantalum molybdenum nitride (TaMoN), tantalum tungsten nitride (TaWN), chromium molybdenum nitride (CrMoN), chromium tungsten nitride (CrWN), and molybdenum tungsten nitride (MoWN).

Examples of a compound composed of the first element and carbon (i.e., a carbide) can include titanium carbide (TiC), zirconium carbide (ZrC), hafnium carbide (HfC), vanadium carbide (VC), niobium carbide (NbC), tantalum carbide (TaC), chromium carbide (Cr₂C), molybdenum carbide (MoC), tungsten carbide (WC), titanium zirconium carbide (TiZrC), titanium hafnium carbide (TiHfC), titanium vanadium carbide (TiVC), titanium niobium carbide (TiNbC), titanium tantalum carbide (TiTaC), titanium chromium carbide (TiCrC), titanium molybdenum carbide (TiMoC), titanium tungsten carbide (TiWC), zirconium hafnium carbide (ZrHfC), zirconium vanadium carbide (ZrVC), zirconium niobium carbide (ZrNbC), zirconium tantalum carbide (ZrTaC), zirconium chromium carbide (ZrCrC), zirconium molybdenum carbide (ZrMoC), zirconium tungsten carbide (ZrWC), hafnium vanadium carbide (HfVC), hafnium niobium carbide (HfNbC), hafnium tantalum carbide (HfTaC), hafnium chromium carbide (HfCrC), hafnium molybdenum carbide (HfMoC), hafnium tungsten carbide (HfWC), vanadium niobium carbide (VNbC), vanadium tantalum carbide (VTaC), vanadium chromium carbide (VCrC), vanadium molybdenum carbide (VMoC), vanadium tungsten carbide (VWC), niobium tantalum carbide (NbTaC), niobium chromium carbide (NbCrC), niobium molybdenum carbide (NbMoC), niobium tungsten carbide (NbWC), tantalum chromium carbide (TaCrC), tantalum molybdenum carbide (TaMoC), tantalum tungsten carbide (TaWC), chromium molybdenum carbide (CrMoC), chromium tungsten carbide (CrWC), and molybdenum tungsten carbide (MoWC).

Examples of a compound composed of the first element, carbon and nitrogen (i.e., carbonitride) can include titanium carbonitride (TiCN), zirconium carbonitride (ZrCN), and hafnium carbonitride (HfCN).

Examples of a compound composed of the first metal element and boron (i.e., a boride) can include titanium boride (TiB₂), zirconium boride (ZrB₂), hafnium boride (HfB₂), vanadium boride (VB₂), niobium boride (NbB₂), tantalum boride (TaB₂), chromium boride (CrB₂), molybdenum boride (MoB₂), and tungsten boride (WB).

Examples of a compound composed of the first metal element and oxygen (i.e., an oxide) can include titanium oxide (TiO₂), zirconium oxide (ZrO₂), hafnium oxide (HfO₂), vanadium oxide (V₂O₅), niobium oxide (Nb₂O₅), tantalum oxide (Ta₂O₅), chromium oxide (Cr₂O₃), molybdenum oxide (MoO₃), and tungsten oxide (WO₃).

Examples of a compound including the first metal element, nitrogen and oxygen (i.e., an oxynitride) can include titanium oxynitride (TiON), zirconium oxynitride (ZrON), hafnium oxynitride (HfON), vanadium oxynitride (VON), niobium oxynitride (NbON), tantalum oxynitride (TaON), chromium oxynitride (CrON), molybdenum oxynitride (MoON), and tungsten oxynitride (WON).

The above compound may be one type of compound or two or more types of compounds in combination.

The coating film can include a solid solution derived from the above compound. The solid solution derived from the above compound means a state in which two or more types of the above compounds are dissolved in each other's crystal structure, and means an interstitial solid solution, a substitutional solid solution or the like.

The coating film preferably includes the above compound and the solid solution derived from the above compound in a total amount of 0% by volume or more and 90% by volume or less, more preferably 5% by volume or more and 70% by volume or less, still more preferably 10% by volume or more and 50% by volume or less.

Coating film 3 may include inevitable impurities, a trace amount of unreacted metal aluminum remaining through a coating film forming process, an amorphous component of a compound including aluminum and oxygen, and the like. Examples of the inevitable impurities include trace amounts of iron (Fe), nickel (Ni), chromium (Cr), manganese (Mn), and carbon (C) derived from a jig (mainly, SUS, carbon and the like) used during the manufacturing process.

The coating film preferably contains the inevitable impurities in an amount by mass of 0.001% or more and 0.5% or less, more preferably 0.001% or more and 0.1% or less.

The composition of coating film 3 is analyzed through SEM-EDS analysis and ICP analysis for qualitative evaluation and quantitative analysis, respectively. SEM-EDS analysis is conducted under the same measuring conditions as the analysis of the composition of the body of the abrasive grain and ICP analysis is conducted under the same measuring conditions as the method for analyzing the atomic ratio of aluminum and oxygen in the coating film, and accordingly, they will not be described repeatedly.

### (Average grain size of crystal grains)

Coating film 3 can be a polycrystal including a plurality of crystal grains. In this case, the plurality of crystal grains preferably have an average grain size of 100 nm or less. This further enhances the coating film in strength, and thus facilitates suppressing damage to coating film 3 per se that is caused by an impactive force (or stress) caused as the abrasive grain is brought into contact with a workpiece. Further, this facilitates alleviating impactive force acting on body 2 of the abrasive grain as it is brought into contact with the workpiece, and body 2 of the abrasive grain is less likely to be damaged. The smaller the average grain size of coating film 3 is, the larger the strength of coating film 3 per se can be.

An upper limit for the average grain size of the plurality of crystal grains included in the coating film is preferably 100 nm, more preferably 50 nm. A lower limit for the average grain size is preferably 1 nm, more preferably 10 nm. The average grain size is preferably 1 nm or more and 100 nm or less, more preferably 10 nm or more and 50 nm or less.

The average grain size of the plurality of crystal grains included in the coating film is calculated using a HAADF-STEM image obtained through a STEM. Specifically, it is calculated in the following method.

Initially, when the coating film has a thickness exceeding 100 nm, the coating film is mechanically polished and subjected to Ar-ion milling to have a thickness of 100 nm or less. This operation is unnecessary when the coating film is 100 nm or less in thickness.

The STEM has a magnification set to 6.5 million times and it is thus used to observe a HAADF-STEM image of the coating film to determine any ten or more areas in which an atomic arrangement is observable. One area where the atomic arrangement is observable is taken as one crystal grain. In a HAADF-STEM image, a crystal grain different in crystal orientation is unobservable, and an area where an atomic arrangement is observable can be regarded as a crystal grain. The equivalent circle diameter of one area in which an atomic arrangement is observable is regarded as one crystal grain. The equivalent circle diameter can be calculated using image analysis software ("WinROOF ver. 7.4.1" (trademark) manufactured by Mitani Corporation). An average grain size of the ten or more crystal grains is taken as an average grain size of the plurality of crystal grains included in the coating film.

### (Structure)

Coating film 3 can have a monolayer structure. As shown in Fig. 2, coating film 3 can have a multilayer structure composed of two or more types of unit layers. When the coating film has a multilayer structure, each unit layer's residual stress increases. This enhances the coating film in hardness and thus suppresses damage to the coating film.

When the coating film has a multilayer structure, the number of layers is not particularly limited. For example, two or three layers may be used. In this case, adjacent unit layers preferably have different compositions. For example, when coating film 3 has a three-layer structure (Fig. 2), and a first unit layer 31, a second unit layer 32, and a third unit layer 33 are sequentially formed outward from the side of body 2 of the abrasive grain, first unit layer 31 and third unit layer 33 can have the same composition, and second unit layer 32 can have a composition different from that of first unit layer 31 and third unit layer 33. Further, first unit layer 31, second unit layer 32, and third unit layer 33 may all have different compositions. The structure of coating film 3 can be analyzed through a cross-sectional observation with an STEM.

### (Thickness)

Coating film 3 preferably has a thickness of 50 nm or more and 1000 nm or less. When the coating film has a thickness of 50 nm or more, it facilitates enhancing the coating film per se in wear resistance and hence suppressing damage to the coating film and the body of the abrasive grain. When the coating film has a thickness of 1000 nm or less, the coating film does not have an excessively large thickness and thus does not easily peel off, and a state with the coating film formed on an external surface of the body of the abrasive grain is easily maintained.

When coating film 3 has a multilayer structure the thickness of coating film 3 is the sum of each layer in thickness. When coating film 3 has a multilayer structure, each layer may be equal or different in thickness.

A lower limit for the coating film in thickness is preferably 50 nm, more preferably 100 nm, still more preferably 150 nm. An upper limit for the coating film in thickness is preferably 1000 nm, more preferably 500 nm, still more preferably 300 nm. The coating film has a thickness more preferably of 100 nm or more and 500 nm or less, still more preferably 150 nm or more and 300 nm or less.

In the present specification, the thickness of the coating film means an average value in thickness of the coating films of 10 super-abrasive grains randomly selected. The thickness of the coating film of each super-abrasive grain for calculating the average value is a value calculated in the following method.

Initially, a molded body in which a plurality of super-abrasive grains are buried in epoxy resin is produced. The content of the super-abrasive grains in the molded body is 50% by volume or more with respect to the resin. The molded body has a shape of a rectangular parallelepiped or a cube.

The molded body is subjected to a CP (cross section polisher) process. This process is performed in two stages. In a first stage of the process, the molded body has any surface processed until a cross section of at least one super-abrasive grain is visible. Subsequently, as a second stage of the process, the processed surface is further CP-processed to remove a thickness corresponding to a length equivalent to 50% of the grain size of the super-abrasive grain. Note that the grain size of the super-abrasive grain is a value as measured with a laser diffraction type particle size distribution analyzer described above.

Subsequently, the cross section of the molded body is observed with an SEM to obtain a backscattered electron image. In the backscattered electron image, three portions of the coating film of a single super-abrasive grain are randomly selected and measured in thickness. An average value in thickness of the three portions is defined as the thickness of the coating film of the super-abrasive grain.

### (Coating method)

Coating film 3 is formed on a surface of body 2 of the abrasive grain by: arc ion plating (AIP), High Power Impulse Magnetron Sputtering (HIPIMS), an arc plasma powder method or similar physical vapor deposition; spray pyrolysis, Metalorganic Chemical Vapor Deposition or (MOCVD) or similar chemical vapor deposition; or the like. For example, the arc plasma powder method is optimal.

The coating is applied under conditions including a target material of aluminum, an oxygen atmosphere, a discharge voltage of 10 V or more and 200 V or less, a discharge frequency of 1 Hz or more and 20 Hz or less, a capacitor having a capacitance of 360 µF or more and 1800 µF or less, and a shot count of 1,000 or more and 10,000,000 or less. Thus, a coating film containing aluminum and oxygen can be formed on a surface of body 2 of the abrasive grain.

At this point in time, the coating film is mainly amorphous, and by appropriately applying heat treatment, the coating film can be structurally controlled, and adhesive strength between the coating film and the body of the abrasive grain can also be enhanced.

Heat treatment at 700°C or higher starts to generate γ-Al₂O₃ and at 1200°C or higher starts to generate α-Al₂O₃. Such a phase transition of a crystal structure involves a change in volume, and inconsistency may be caused at an interface between coating film 3 and body 2 of the abrasive grain. When the heat treatment has high temperature, the coating film tends to be composed of crystal grains having an increased grain size. When the heat treatment has low temperature, the coating film tends to be composed of crystal grains having a decreased grain size.

For example, when the heat treatment is applied at a temperature of 800 to 1000°C for 30 to 120 minutes, it can cause coating film 3 to contain γ-Al₂O₃ and crystal grains to have an average grain size of 100 nm or less so that high hardness can be provided, inconsistency at an interface between the body of the abrasive grain and the coating film can be suppressed, and close adhesion without a gap can be achieved by interdiffusion of atoms between the body of the abrasive grain and the coating film. A trace amount of unreacted metal aluminum, an amorphous component of aluminum and oxygen, and the like may remain.

An atomic ratio of aluminum and oxygen (Al/O) included in coating film 3 can be controlled by arc plasma powder, the oxygen partial pressure of the atmosphere in the heat treatment or the like. The atomic ratio (Al/O) increases when the oxygen partial pressure is reduced, and decreases when the oxygen partial pressure is increased. An atomic ratio (Al/O) of 0.2 or more facilitates generating γ-Al₂O₃, an atomic ratio (Al/O) of 0.9 or less allows insulation to be maintained, and an atomic ratio (Al/O) of 0.4 or more and 0.7 or less allows a most improved grinding ratio.

### [Application]

The super-abrasive grain according to the first embodiment is suitably applicable as abrasive grains for a grinding tool (a grindstone) such as a super-abrasive grinding wheel.

### [Second Embodiment: super-abrasive grinding wheel]

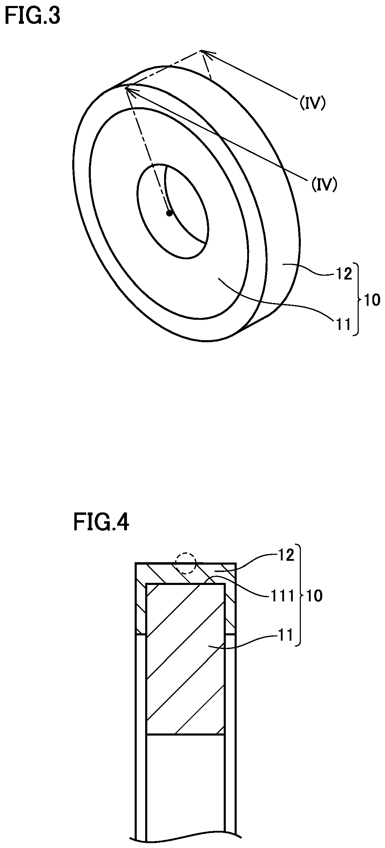

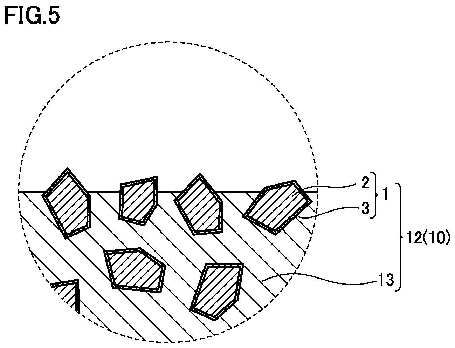

A super-abrasive grinding wheel according to an embodiment of the present disclosure will now be described with reference to Figs. 3 to 5. Fig. 3 is a schematic perspective view of a super-abrasive grinding wheel according to a second embodiment. Fig. 4 is a cross section of the super-abrasive grinding wheel shown in Fig. 3 as cut along a plane including a line (IV)-(IV). Fig. 5 is an enlarged cross section of a portion of the super-abrasive grinding wheel shown in Fig. 4 that is surrounded by a circle drawn with a broken line.

Super-abrasive grinding wheel 10 includes a disk-shaped substrate 11 and a super-abrasive grain layer 12 covering at least an outer peripheral surface of substrate 11, and super-abrasive grain layer 12 is a super-abrasive grinding wheel having super-abrasive grain 1 described above. Super-abrasive grinding wheel 10 comprises super-abrasive grain 1 having body 2 resistant to damage, and thus has a high grinding ratio.

### [Substrate]

Substrate 11 is formed of material including Al and an Al alloy, iron and an iron alloy, carbon tool steel, high speed tool steel, alloy tool steel, cemented carbide, cermet and the like. Substrate 11 can have a size (inner and outer diameters and thickness) selectable as appropriate depending for example on the size of a machine tool such as a machining center on which super-abrasive grinding wheel 10 is installed, that is, depending on the size of the workpiece. Substrate 11 can be a substrate for a known super-abrasive grinding wheel.

### [Super-abrasive grain layer]

Super-abrasive grain layer 12 in this example is formed to cover front and outer peripheral end surfaces of outer peripheral surface 111 of substrate 11 continuously (see Figs. 3 and 4). Super-abrasive grain layer 12 can be selected in size (thickness and width), as appropriate, depending on the size (thickness and width) of substrate 11. The thickness refers to a length in the radial direction of super-abrasive grinding wheel 10, and the width refers to a length in the axial direction of super-abrasive grinding wheel 10. Super-abrasive grain layer 12 includes super-abrasive grains 1 and a bonding material 13 (see Fig. 5).

### (Super-abrasive grain)

Super-abrasive grain 1 is the super-abrasive grain of the first embodiment. Super-abrasive grain 1 can be a plurality of such super-abrasive grains. Super-abrasive grain layer 12 on the side of its front surface has super-abrasive grains 1 partially exposed from bonding material 13 to provide a cutting edge portion to grind a workpiece.

In contrast, super-abrasive grain layer 12 on the side of substrate 11 has super-abrasive grains 1 all buried in bonding material 13. Super-abrasive grains 1 that are buried are partially exposed and thus grind a workpiece during a process in which while the workpiece is ground by super-abrasive grinding wheel 10 super-abrasive grains 1 on the side of the front surface of super-abrasive grain layer 12 are worn and fall off and bonding material 13 are also worn.

The plurality of super-abrasive grains 1 may all have their respective bodies 2 identically configured (i.e., identical in material, equal in size and the like) and their respective coating films 3 identically configured (i.e., identical in material, equal in thickness and the like). Some super-abrasive grains 1 may have body 2 and coating film 3 different in configuration (i.e., material, size, and the like) than other super-abrasive grains 1. For example, some super-abrasive grains 1 may have their bodies 2 composed of cBN and other super-abrasive grains 1 may have their bodies 2 composed of diamond, and some and other super-abrasive grains 1 may have their respective coating films 3 identically configured (i.e., identical in material, and equal in thickness and grain size). Super-abrasive grain layer 12 may have mixed therein known abrasive grains other than super-abrasive grain 1.

A lower limit for the average grain size (a volume-based median diameter d50) of the plurality of super-abrasive grains included in the super-abrasive grain layer is preferably 30 µm, preferably 40 µm, preferably 50 µm, preferably 60 µm. An upper limit for the average grain size (the volume-based median diameter d50) of the plurality of super-abrasive grains is preferably 600 µm, preferably 400 µm, preferably 300 µm, preferably 150 µm. The plurality of super-abrasive grains have an average grain size (a volume-based median diameter d50) preferably of 30 µm or more and 600 µm or less, preferably 40 µm or more and 400 µm or less, preferably 50 µm or more and 300 µm or less, preferably 60 µm or more and 150 µm or less.

The average grain size of the plurality of super-abrasive grains is determined by immersing the super-abrasive grain layer in an acid (for example, aqua regia (a liquid of a mixture of concentrated hydrochloric acid and concentrated nitric acid at a volume ratio of 3:1)), dissolving the bonding material in the acid, extracting the plurality of super-abrasive grains alone, and measuring the extracted plurality of super-abrasive grains with a laser diffraction type particle size distribution analyzer. When the super-abrasive grain layer is a large layer, the super-abrasive grain layer is cut off by a predetermined volume (for example of 0.5 cm³) and from the cut portion the bonding material is dissolved as described above to extract a plurality of super-abrasive grains.

### (Bonding material)

Bonding material 13 fixes super-abrasive grains 1 to outer peripheral surface 111 (Fig. 4). Bonding material 13 includes in type one type selected from resin bond, metal bond, vitrified bond, electroplated bond and a combination thereof, or metal wax, for example. These bonds and metal wax can be known bonds and metal wax.

For example, the resin bond includes as a main component a thermosetting resin such as phenol resin, epoxy resin, and polyimide resin. The metal bond includes as a main component an alloy including copper, tin, iron, cobalt, or nickel. The vitrified bond includes a vitreous material as a main component. The electroplated bond includes nickel plating. The metal wax includes silver (Ag) wax and the like.

The type of bonding material 13 can be appropriately selected depending on what material coating film 3 of super-abrasive grain 1 is composed of, or the like. For example, when coating film 3 of super-abrasive grain 1 is electrically conductive, then, as bonding material 13, electroplated bond is excluded, and resin bond, metal bond, vitrified bond, and metal wax can be used. When coating film 3 of super-abrasive grain 1 has an insulating property, all the above bonds including electroplated bond and metal wax can be used.

Super-abrasive grinding wheel 10 (see Fig. 3) can be produced as follows: a plurality of super-abrasive grains 1 each having body 2 having a surface at least partially coated with coating film 3 (see Fig. 1) are prepared and fixed to outer peripheral surface 111 of substrate 11 by using bonding material 13 (see Fig. 5). Alternatively, super-abrasive grinding wheel 10 may be produced as follows: a plurality of bodies 2 for abrasive grains uncoated with coating film 3 are prepared and fixed to outer peripheral surface 111 of substrate 11 by using bonding material 13, and thereafter, bodies 2 have their surfaces (or cutting edge portion) coated with coating film 3. In that case, the coating can be done in any of the AIP, HIPIMS, CVD and arc plasma powder methods mentioned above.

### (Application)

Super-abrasive grinding wheel 10 according to an embodiment is suitably applicable to grinding automobile parts, optical glass, magnetic materials, semiconductor materials, and the like, grinding to form grooves for end mills, drills and reamers and the like, grinding to form a breaker for an indexable insert, and heavy duty grinding for various tools.

### EXAMPLES

The embodiments will now be described more specifically with reference to examples. However, the embodiments are not limited by these examples.

### <<Test Example 1>>

### <Producing super-abrasive grain>

### (Sample Nos. 1, 4, 5)

As the body of the abrasive grain, single-crystal cubic boron nitride having an average grain size of 75 µm was prepared. A coating film was formed on the entire surface of the cubic boron nitride in the arc plasma powder method. The coating was done with a coating apparatus set under conditions, as indicated below.

Coating apparatus: Nanoparticle formation apparatus APD-P produced by ADVANCE RIKO, Inc.
Target: aluminum
Introduced gas: O₂
Discharge voltage: 150 V
Discharge frequency: 6 Hz
Capacitor's capacitance: 1080 µF
Shot count: 400,000
Amount of powder processed: 25 g
Speed of rotation of powder container: 50 rpm

The coating film was formed in an atmosphere under a condition indicated in Table 1. For example, the coating film of Sample No. 1 was formed in an atmosphere of oxygen of 0.88 Pa.

After the coating film was formed on the surfaces of particles of cubic boron nitride, a vacuum heat treatment furnace ("NRF-658-0.7D1.5V" produced by Nihon-tokusyukikai) was used (at 1 × 10⁻³ Pa or less) to perform heat treatment to obtain super-abrasive grains. The heat treatment was performed under conditions as indicated in Table 1. For example, for Sample No. 1, heat treatment was performed in a vacuum at 900°C for 60 minutes.

### (Sample No. 2)

For Sample No. 2, single-crystal cubic boron nitride having an average grain size of 75 µm was used exactly as a super-abrasive grain. That is, for Sample No. 2, no coating film was formed and no heat treatment was performed.

### (Sample No. 3)

For Sample No. 3, polycrystalline cubic boron nitride having an average grain size of 75 µm was prepared. A coating film was formed on the entire surface of the cubic boron nitride in the arc plasma powder method. The coating was done with the same coating apparatus as Sample No. 1, as set under the same conditions as Sample No. 1. The coating film was formed in an atmosphere under a condition indicated in Table 1. Thereafter, heat treatment was performed under conditions indicated in Table 1 to obtain super-abrasive grains.

### (Sample No. 6)

As the body of the abrasive grain, single-crystal cubic boron nitride having an average grain size of 75 µm was prepared. A coating film was formed on the entire surface of the cubic boron nitride in the arc plasma powder method. The coating was done with the same coating apparatus as Sample No. 1, as set under the same conditions as Sample No. 1, except that aluminum and zirconium were used as a target. The coating film was formed in an atmosphere under a condition indicated in Table 1.

Specifically, a first unit layer made of a compound including aluminum and oxygen was formed on a surface of the body of the abrasive grain to have an average thickness of 10 nm. A second unit layer made of a compound including zirconium and oxygen was formed thereon to have an average thickness of 10 nm. The first unit layer and the second unit layer were alternately formed to form a coating film having a structure of 30 layers in total. Thereafter, heat treatment was performed under conditions indicated in Table 1 to obtain super-abrasive grains.

### (Sample No. 7)

As the body of the abrasive grain, single-crystal cubic boron nitride having an average grain size of 75 µm was prepared. A coating film was formed on the entire surface of the cubic boron nitride in the arc plasma powder method. The coating was done with the same coating apparatus as Sample No. 1, as set under the same conditions as Sample No. 1, except that aluminum and titanium aluminum (50 atomic% of Ti and 50 atomic% of Al) were used as a target.

Initially, a first unit layer made of a compound including aluminum and oxygen was formed to have an average thickness of 200 nm. Thereon, a second unit layer made of a compound including titanium, aluminum, and nitrogen was formed on a surface of the body of the abrasive grain to have an average thickness of 100 nm.

The coating film was formed in an atmosphere under a condition indicated in Table 1. Specifically, the first unit layer was formed in an oxygen atmosphere at 0.88 Pa, and the second unit layer was formed in a nitrogen atmosphere at 0.88 Pa.

Thereafter, heat treatment was performed under conditions indicated in Table 1 to obtain super-abrasive grains.

### (Sample No. 8)

For Sample No. 8, single-crystal cubic boron nitride having an average grain size of 30 µm was prepared. A coating film was formed on the entire surface of the cubic boron nitride in the arc plasma powder method. The coating was done with the same coating apparatus as Sample No. 1, as set under the same conditions as Sample No. 1. The coating film was formed in an atmosphere under a condition indicated in Table 1. Thereafter, heat treatment was performed under conditions indicated in Table 1 to obtain super-abrasive grains.

### (Sample 9)

For Sample No. 9, single-crystal cubic boron nitride having an average grain size of 598 µm was prepared. A coating film was formed on the entire surface of the cubic boron nitride in the arc plasma powder method. The coating was done with the same coating apparatus as Sample No. 1, as set under the same conditions as Sample No. 1. The coating film was formed in an atmosphere under a condition indicated in Table 1. Thereafter, heat treatment was performed under conditions indicated in Table 1 to obtain super-abrasive grains.

### <Measurement>

When the super-abrasive grains prepared as above were observed in cross section with an electron microscope, it has been confirmed that the super-abrasive grains of Sample Nos. 1 and 3 to 9 had their bodies entirely coated with the coating film.

The super-abrasive grains produced as described above were subjected to measurement to identify the coating film's composition, the atomic ratio of aluminum to oxygen in the coating film (hereinafter also referred to as an "Al/O ratio"), the coating film's average grain size and average thickness, and the super-abrasive grain's grain size. How they are specifically measured is the same as indicated in the first embodiment, and accordingly, it will not be described repeatedly. A result is indicated in Table 1, the column "coating film," the sub-columns "composition," "Al/O ratio," "average grain size" and "average thickness," and the column "super-abrasive grain," the sub-column "grain size."

### <Producing super-abrasive grinding wheel>

The super-abrasive grains produced as described above were used to produce super-abrasive grinding wheels having the same configuration as that of super-abrasive grinding wheel 10 shown in Figs. 3 to 5. More specifically, a plurality of super-abrasive grains were fixed to an outer peripheral surface of a substrate with a bonding material to produce each super-abrasive grinding wheel. The substrate was made of S45C, and had a diameter (an outer diameter): 50 mm, a mounting hole diameter (an inner diameter): 20 mm, and a thickness: 8 mm. The bonding material was an Ag wax material.

### <Evaluation of grinding performance>

The super-abrasive grinding wheel of each sample had its grinding performance evaluated by determining its grinding ratio. The grinding ratio was determined as follows: the super-abrasive grinding wheel of each sample was set in the following apparatus and ground a workpiece for 180 minutes under the following conditions, and the grinding ratio was determined from "the volume of the workpiece ground away/the total worn volume of super-abrasive grains." That is, the higher the grinding ratio, the better the grinding performance. A result thereof is shown in Table 1.
Workpiece: SCM 415 hardened steel (3.5 mm x 60 mm x 100 mm)
Apparatus: Machining Center V-55 produced by Makino Milling Machine Co., Ltd.
Grinding wheel's peripheral speed: 2700 mm/min
Cutting: 0.15 mm
Feed rate: 100 mm/min
Coolant: Emulsion type (YUSHIROKEN (registered trademark))

### Table 1

**Table 1**

| sample No. | body of abrasive grain | | | condition for atmosphere when forming coating film | condition for heat treatment | | | coating film | | | | super-abrasive grain | grinding ratio |
|---|---|---|---|---|---|---|---|---|---|---|---|---|---|
| | composition | structure | average grain size (µm) | | atmosphere | temperature | time | composition | Al/O ratio | average crystal grain size (nm) | average thickness (nm) | grain size (µm) | |
| 1 | cubic boron nitride | single crystal | 75 | O₂: 0.88Pa | vacuum | 900°C | 60 min. | γ-Al₂O₃ | 0.7 | 50 | 300 | 75.6 | 4364 |
| 2 | cubic boron nitride | single crystal | 75 | - | - | - | - | - | | - | - | - | 1977 |
| 3 | cubic boron nitride | polycrystalline | 75 | O₂: 0.30Pa | vacuum | 800°C | 60 min. | γ-Al₂O₃ | 0.9 | 30 | 300 | 75.6 | 4027 |
| 4 | cubic boron nitride | single crystal | 75 | O₂: 1.25Pa | atmosphere | 850°C | 60 min. | γ-Al₂O₃ | 0.2 | 20 | 200 | 75.4 | 4001 |
| 5 | cubic boron nitride | single crystal | 75 | O₂: 0.72Pa | vacuum | 870°C | 60 min. | γ-Al₂O₃ | 0.4 | 40 | 400 | 75.8 | 4318 |
| 6 | cubic boron nitride | single crystal | 75 | O₂: 0.88Pa | vacuum | 900°C | 60 min. | γ-Al₂O₃ ZrO₂ | 0.2 | 45 | 300 | 75.6 | 3725 |
| 7 | cubic boron nitride | single crystal | 75 | O₂: 0.88Pa N₂: 0.88Pa | atmosphere | 850°C | 60 min. | γ-Al₂O₃ TiAIN | 0.9 | 40 | 300 | 75.6 | 3989 |
| 8 | cubic boron nitride | single crystal | 30 | O₂: 0.88Pa | vacuum | 900°C | 60 min. | γ-Al₂O₃ | 0.7 | 5 | 50 | 30.1 | 3182 |
| 9 | cubic boron nitride | single crystal | 600 | O₂: 0.88Pa | vacuum | 1300°C | 60 min. | γ-Al₂O₃ | 0.7 | 100 | 1000 | 602 | 3325 |

### <Evaluation>

The super-abrasive grains of Sample Nos. 1 and 3 to 9 correspond to Examples. The super-abrasive grain of Sample No. 2 does not comprise the coating film and thus corresponds to a comparative example. The super-abrasive grinding wheels of Sample Nos. 1 and 3 to 9 all had a grinding ratio of 3100 or more, and have been confirmed to have a grinding ratio higher than that of the super-abrasive grinding wheel of Sample No. 2.

The super-abrasive grains of Sample Nos. 1 and 3 to 7 had a coating film containing γ-Al₂O₃, and having an average thickness of 200 nm or more. The super-abrasive grinding wheels of Sample Nos. 1 and 3 to 7 all have a grinding ratio of 3700 or more. It has been confirmed that when the coating film contains γ-Al₂O₃ a higher grinding ratio is attained. Although Sample No. 8 also contained γ-Al₂O₃, it had a coating film smaller in thickness than Sample Nos. 1 and 3 to 7, and thus had a slightly inferior grinding ratio.

The super-abrasive grains of Sample Nos. 1 and 5 had a coating film containing γ-Al₂O₃, and an atomic ratio of aluminum to oxygen (Al/O ratio) of 0.4 or more and 0.7 or less. The super-abrasive grinding wheels of Sample Nos. 1 and 5 both have a grinding ratio of 4300 or more. It has been confirmed that when the coating film contains γ-Al₂O₃ and has an Al/O ratio of 0.4 or more and 0.7 or less, a significantly high grinding ratio is attained. Although Sample No. 8 also contained γ-Al₂O₃ and had an Al/O ratio of 0.7, it had a coating film smaller in thickness than Samples Nos. 1 and 5, and thus had a slightly inferior grinding ratio.

The super-abrasive grain of Sample No. 3 has a body composed of polycrystalline cubic boron nitride. The super-abrasive grinding wheel of Sample No. 3 had a grinding ratio of 4000 or more, and has been confirmed to have a grinding ratio higher than the super-abrasive grinding wheel of Sample No. 2 that did not comprise the coating film.

### <<Test Example 2>>

### (Sample No. 10)

As the body of the abrasive grain, single-crystal cubic boron nitride having an average grain size of 200 µm was prepared. A coating film was formed on the entire surface of the cubic boron nitride in the arc plasma powder method. The coating was done with the same coating apparatus as Sample No. 1, as set under the same conditions as Sample No. 1. The coating film was formed in an atmosphere under a condition indicated in Table 2.

After the coating film was formed on the surfaces of particles of cubic boron nitride, a vacuum heat treatment furnace ("NRF-658-0.7D1.5V" produced by Nihon-tokusyukikai) was used (at 1 x 10⁻³ Pa or less) to perform heat treatment to obtain super-abrasive grains. The heat treatment was performed under conditions as indicated in Table 2.

### (Sample No. 11)

For Sample No. 11, single-crystal diamond having an average grain size of 200 µm was prepared. A coating film was formed on the entire surface of the diamond in the arc plasma powder method. The coating was done with the same coating apparatus as Sample No. 1, as set under the same conditions as Sample No. 1. The coating film was formed in an atmosphere under a condition indicated in Table 2. Thereafter, heat treatment was performed under conditions indicated in Table 2 to obtain super-abrasive grains.

### (Sample No. 12)

For Sample No. 12, single-crystal cubic boron nitride having an average grain size of 200 µm and single-crystal diamond having an average grain size of 200 µm were prepared at a volume ratio of 1:1. A coating film was formed on the entire surface of the cubic boron nitride and that of the diamond in the arc plasma powder method. The coating was done with the same coating apparatus as Sample No. 1, as set under the same conditions as Sample No. 1. The coating film was formed in an atmosphere under a condition indicated in Table 2. Thereafter, heat treatment was performed under conditions indicated in Table 2 to obtain a mixture of super-abrasive grains having their bodies composed of cubic boron nitride and super-abrasive grains having their bodies composed of diamond.

### (Sample No. 13)

For Sample No. 13, single-crystal cubic boron nitride having an average grain size of 200 µm was used exactly as a super-abrasive grain. That is, for Sample No. 13, no coating film was formed and no heat treatment was performed.

### (Sample No. 14)

For Sample No. 14, polycrystalline diamond having an average grain size of 200 µm was prepared. A coating film was formed on the entire surface of the diamond in the arc plasma powder method. The coating was done with the same coating apparatus as Sample No. 1, as set under the same conditions as Sample No. 1. The coating film was formed in an atmosphere under a condition indicated in Table 2. Thereafter, heat treatment was performed under conditions indicated in Table 2 to obtain super-abrasive grains having bodies composed of polycrystalline diamond.

### <Measurement>

When the super-abrasive grains prepared as above were observed in cross section with an electron microscope, it has been confirmed that the super-abrasive grains of Sample Nos. 10 to 12 and 14 had their bodies entirely coated with the coating film.

The super-abrasive grains produced as described above were subjected to measurement to identify the coating film's composition, the atomic ratio of aluminum to oxygen in the coating film (hereinafter also referred to as an "Al/O ratio"), the coating film's average grain size and average thickness, and the super-abrasive grain's grain size. How they are specifically measured is the same as indicated in the first embodiment, and accordingly, it will not be described repeatedly. A result is indicated in Table 2, the column "coating film," the sub-columns "composition," "Al/O ratio," "average grain size" and "average thickness," and the column "super-abrasive grain," the sub-column "grain size."

### <Producing super-abrasive grinding wheel>

The super-abrasive grains produced as described above were used to produce super-abrasive grinding wheels having the same configuration as that of super-abrasive grinding wheel 10 shown in Figs. 3 to 5. More specifically, a plurality of super-abrasive grains were fixed to an outer peripheral surface of a substrate with a bonding material to produce each super-abrasive grinding wheel. The substrate was made of S45C, and had a diameter (an outer diameter): 50 mm, a mounting hole diameter (an inner diameter): 20 mm, and a thickness: 8 mm. The bonding material was an Ag wax material.

### <Evaluation of grinding performance>

The super-abrasive grinding wheel of each sample had its grinding performance evaluated by determining its grinding ratio. The grinding ratio was determined as follows: the super-abrasive grinding wheel of each sample was set in the following apparatus and ground a workpiece for 180 minutes under the following conditions, and the grinding ratio was determined from "the volume of the workpiece ground away/the total worn volume of super-abrasive grains." That is, the higher the grinding ratio, the better the grinding performance. A result is shown in Table 2.
Workpiece: Inconel 718 (3.0 mm x 100 mm x 100 mm)
Apparatus: Machining Center V-55 produced by Makino Milling Machine Co., Ltd.
Grinding wheel's peripheral speed: 2700 mm/min
Cutting: 1.2 mm
Feed rate: 50 mm/min
Coolant: Emulsion type (YUSHIROKEN (registered trademark))

### [Table 2]

**Table 2**

| sample No. | body of abrasive grain | | | condition for atmosphere when forming coating film | condition for heat treatment | | | coating film | | | | super-abrasive grain | grinding ratio |
|---|---|---|---|---|---|---|---|---|---|---|---|---|---|
| | composition | structure | average grain size (µm) | | atmosphere | temperature | time | composition | Al/O ratio | average crystal grain size (nm) | average thickness (nm) | grain size (µm) | |
| 10 | cubic boron nitride | single crystal | 200 | 1.10 Pa | vacuum | 900°C | 60 min. | γ-Al₂O₃ | 0.5 | 40 | 300 | 200.6 | 250 |
| 11 | diamond | single crystal | 200 | 1.10 Pa | vacuum | 900°C | 60 min. | γ-Al₂O₃ | 0.5 | 10 | 200 | 200.4 | 350 |
| 12 | cubic boron nitride/ diamond | single crystal/ single crystal | 200/ 200 | 0.88 Pa | vacuum | 900°C | 60 min. | γ-Al₂O₃/ γ-Al₂O₃ | 0.7/ 0.7 | 50 | 200 | 200.4 | 421 |
| 13 | cubic boron nitride | single crystal | 200 | - | - | - | - | - | - | - | - | - | 120 |
| 14 | diamond | polycrystalline | 200 | 0.88 Pa | vacuum | 900°C | 60 min. | γ-Al₂O₃ | 0.7 | 30 | 200 | 200.4 | 300 |

### <Evaluation>

The super-abrasive grains of Sample Nos. 10 to 12 and 14 correspond to Examples. The super-abrasive grain of Sample No. 13 does not comprise the coating film and thus corresponds to a comparative example. The super-abrasive grinding wheels of Sample Nos. 10 to 12 and 14 all had a grinding ratio of 250 or more, and have been confirmed to have a grinding ratio higher than that of the super-abrasive grinding wheel of Sample No. 13.

In a process for grinding Inconel, super-abrasive grains easily fracture. Diamond is tougher than cubic boron nitride. Therefore, Sample Nos. 11 and 14 having abrasive grains having bodies composed of diamond had a higher grinding ratio than Sample No. 10 having abrasive grains having bodies composed of cubic boron nitride. On the other hand, diamond is weaker than cubic boron nitride against thermal abrasion. Therefore, Sample No. 12 including both super-abrasive grains having bodies composed of diamond and super-abrasive grains having bodies composed of cubic boron nitride exhibited a highest grinding ratio.

While embodiments and examples of the present disclosure have been described as above, it is also planned from the beginning that the configurations of the above-described embodiments and examples are appropriately combined and variously modified.

The presently disclosed embodiments and examples are illustrative in any respects and should not be construed as being restrictive. The scope of the present invention is defined by the scope of the claims, rather than the embodiments and the examples described above, and is intended to include any modifications within the scope and meaning equivalent to the scope of the claims.

### REFERENCE SIGNS LIST

1 super-abrasive grain, 2 body of abrasive grain, 3 coating film, 31 first unit layer, 32 second unit layer, 33 third unit layer, 10 super-abrasive grinding wheel, 11 substrate, 111 outer peripheral surface, 12 super-abrasive grain layer, 13 bonding material.

## Claims

1. A super-abrasive grain comprising:
a body composed of cubic boron nitride or diamond; and
a coating film including aluminum and oxygen and coating at least a portion of a surface of the body.

2. The super-abrasive grain according to claim 1, wherein the body of the abrasive grain is composed of cubic boron nitride.

3. The super-abrasive grain according to claim 1 or 2, wherein the body of the abrasive grain has a single-crystal structure.

4. The super-abrasive grain according to claim 1 or 2, wherein the body of the abrasive grain has a polycrystalline structure.

5. The super-abrasive grain according to any one of claims 1 to 4, wherein the coating film includes γ-Al₂O₃.

6. The super-abrasive grain according to any one of claims 1 to 5, wherein the coating film includes one or more types of compounds composed of a first element of at least one type selected from the group consisting of a group 4 element, a group 5 element and a group 6 element of the periodic table and a second element of at least one type selected from the group consisting of oxygen, nitrogen, carbon, and boron.

7. The super-abrasive grain according to any one of claims 1 to 6, wherein
the coating film includes a plurality of crystal grains, and
the plurality of crystal grains has an average grain size of 100 nm or less.

8. The super-abrasive grain according to any one of claims 1 to 7, wherein in the coating film, aluminum and oxygen have an atomic ratio Al/O of 0.2 or more and 0.9 or less.

9. The super-abrasive grain according to claim 8, wherein the Al/O ratio is 0.4 or more and 0.7 or less.

10. The super-abrasive grain according to any one of claims 1 to 9, wherein the coating film has a thickness of 50 nm or more and 1000 nm or less.

11. The super-abrasive grain according to any one of claims 1 to 10, wherein the coating film has a multilayer structure composed of two or more types of unit layers.

12. The super-abrasive grain according to any one of claims 1 to 11, having a grain size of 30 µm or more and 600 µm or less.

13. A super-abrasive grinding wheel comprising:
a disk-shaped substrate; and
a super-abrasive grain layer covering at least an outer peripheral surface of the substrate,
the super-abrasive grain layer having the super-abrasive grain according to any one of claims 1 to 12.
